(19) Europäisches Patentamt
European Patent Office
Office européen des brevets

(11) Veröffentlichungsnummer: **0 122 552**
**B1**

(12) # EUROPÄISCHE PATENTSCHRIFT

(45) Veröffentlichungstag der Patentschrift: **18.10.89**

(51) Int. Cl.⁴: **C 08 L 75/06**, C 08 G 18/10, C 09 D 3/72, D 06 N 3/14

(21) Anmeldenummer: **84103777.3**

(22) Anmeldetag: **05.04.84**

(54) **Wässrige, vernetzerhaltige Polyurethanzubereitungen und ihre Verwendung zur Thermoaktiv-Einstrich-Umkehrbeschichtung.**

(30) Priorität: **13.04.83 DE 3313237**

(43) Veröffentlichungstag der Anmeldung: **24.10.84 Patentblatt 84/43**

(45) Bekanntmachung des Hinweises auf die Patenterteilung: **18.10.89 Patentblatt 89/42**

(84) Benannte Vertragsstaaten: **BE DE FR GB IT NL**

(56) Entgegenhaltungen:
**EP-A- 0 000 381**
**EP-A- 0 089 497**
**DE-A- 2 416 447**
**FR-A- 2 007 794**

(73) Patentinhaber: **BAYER AG, D-5090 Leverkusen 1 Bayerwerk (DE)**

(72) Erfinder: **Thoma, Wilhelm, Dr., Birkenweg 25, D-5090 Leverkusen 31 (DE)**
Erfinder: **Nachtkamp, Klaus, Dr., Leuchterstrasse 11, D-5000 Koeln 80 (DE)**
Erfinder: **Schröer, Walter, Dr., Nicolai-Hartmannstrasse 29, D-5090 Leverkusen 1 (DE)**
Erfinder: **Langel, Rolf, Hüscheiderstrasse 85, D-5090 Leverkusen 31 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

**Beschreibung**

Die Erfindung betrifft Zubereitungen von wäßrigen Polyurethan-Dispersionen, enthaltend Polyurethane mit seitenständigen OH-Gruppen, gegebenenfalls in Abmischungen mit PU-Dispersionen ohne seitenständige OH-Gruppen, welche eine Vernetzerkombination aus Formaldehydharzen und blockierten Polyisocyanaten, sowie gegebenenfalls Griffmittel, Silikone und übliche Zusätze enthalten.

Weiterer Erfindungsgegenstand ist die Verwendung dieser Zubereitungen zur Herstellung von leichten Beschichtungen nach dem Thermoaktiv-Einstrich-Umkehrbeschichtungsverfahren, wobei man die PU-Zubereitung auf einen einstweiligen Träger aufbringt, trocknet, auf den trockenen Polyurethan-Film das (textile) Substrat unter erhöhter Temperatur und Druck kaschiert und anschließend den Polyurethanverbund bei höherer Temperatur vernetzt.

Durch die Mischvernetzung mit Formaldehydharzen plus blockierten Polyisocyanaten werden Beschichtungen mit ausgezeichneter Substrathaftung und Naßfestigkeitswerten erhalten.

Die Herstellung von Kunstleder für die verschiedensten Verwendungszwecke, z.B. Oberbekleidung, Schuhobermaterial oder Täschnermaterial, aus Polyurethan-Rohstoffen im Umkehrverfahren (Transferverfahren) ist Stand der Technik. Im allgemeinen wird ein Aufbau aus zwei Schichten («Strichen»), Deck- und Haftstrich, praktiziert. Die Feststoffauflagen pro Strich liegen zwischen 20 und 50 g/m$^2$. Als Rohstoffe dienen üblicherweise Lösungen und Dispersionen von Einkomponenten- und auch Zweikomponenten-Polyurethanen. Letztere erhalten erst durch Vernetzung mit Polyisocyanaten ihren endgültigen Kunststoffcharakter.

Neuerer Stand der Technik zur Beschichtung textiler, vorzugsweise bahnförmiger Unterlagen ist ein sog. thermoaktives Einstrich-Umkehrverfahren. Hierbei wird die Streichpaste auf einen einstweiligen Träger, z.B. ein Trennpapier oder eine Silikonmatrize gerakelt, das Lösungsmittel (Gemisch) abgedampft, an einem beheizten Zylinder unter Walzenandruck das textile Substrat auf den trockenen, thermisch aktivierten Polyurethan-Film kaschiert und dieser anschließend bei höherer Temperatur vernetzt. Die Vorteile des thermoaktiven Einstrich-Umkehrverfahrens liegen in der möglichen niedrigen Auflage, z.B. 15 bis 30 g/m$^2$, und damit in der Herstellbarkeit leichter Beschichtungsartikel, besonders aber in der Verwendungsmöglichkeit von Substraten, die sich für eine Lösungsmittelbeschichtung oder für die Direktbeschichtung von ihrer Konstruktion oder ihren Löseeigenschaften (z.B. Polyacrylunterlagen oder sog. Koagulate) her nicht oder nur bedingt eignen. Weiterhin lassen sich nach diesem Thermoaktiv-Einstrich-Umkehrverfahren auch sehr leichte oder grobmaschige Gewebe und Gewirke ohne die Gefahr des Durchkaschierens beschichten.

Nachteilig sind die Haftprobleme, die an nach dem Thermoaktiv-Einstrich-Transferverfahren hergestellten Artikeln beobachtet werden. Die Haftwerte sind schwankend und besonders die Naßhaftwerte relativ niedrig. Die Verwendung von Lösungen in organischen Lösungsmitteln ist außerdem aus ökologischer Sicht nachteilig.

Die Erfindung beschreibt geeignete Polyurethanzubereitungen und deren Verwendung im Thermoaktiv-Einstrich-Umkehrverfahren unter Vermeidung der oben beschriebenen Nachteile.

Aus der DE-A 2 416 447 sind Polyurethanmassen bekannt, die seitenständige Carboxylgruppen enthalten können; ein Hinweis auf seitenständige Hydroxylgruppen ist der Literaturstelle nicht zu entnehmen.

Die DE-A 2 732 131 beschreibt seitenständige Hydroxylgruppen aufweisende Polyurethane; eine Vernetzung dieser Gruppen wird nicht beschrieben.

Gegenstand der Erfindung sind 20 bis 60%ige, vorzugsweise 30 bis 50%ige, wäßrige, vernetzerhaltige Zubereitungen auf Polyurethan-Dispersionsbasis zur Beschichtungsherstellung, dadurch gekennzeichnet, daß sie enthalten

I) auf 100 Teile Feststoff wäßriger Polyurethandispersionen aus

A) 43–100 Gew.-%, vorzugsweise 70–100%, besonders bevorzugt 80–100%, an Dispersionen von Polyurethanen mit seitenständigen OH-Gruppen und

B) 0–57 Gew.-%, vorzugsweise 0–30%, besonders bevorzugt 0–20 Gew.-% an Dispersionen von Polyurethanen ohne seitenständige OH-Gruppen,

II) 3–50 Teile (Feststoff, bezogen auf Feststoff I), vorzugsweise 4–40 Teile, besonders bevorzugt 5 bis 30 Teile einer Vernetzerkombination aus

C) 2,5–90 Gew.-%, vorzugsweise 3–60 Gew.-%, besonders bevorzugt 4–40 Gew.%, an Formaldehydharzen, bevorzugt Formaldehyd-Harnstoff- und/oder Formaldehyd-Melamin-Harzen und

D) 10–97,5 Gew.-%, vorzugsweise 40–97%, besonders bevorzugt 60–96 Gew.-%, an blockierten Polyisocyanaten,

III) 0–15 Teile (bezogen auf I)), vorzugsweise 0–10, besonders bevorzugt 1–6 Teile, an Griffmitteln,

IV) 0–20 Teile (bezogen auf I)), vorzugsweise 0–12 Teile, besonders bevorzugt 0,5–10 Teile, an Silikonen und

V) 0–25 Teile (bezogen auf I)), vorzugsweise 0–20, besonders bevorzugt 0–15 Teile, an sonstigen an sich bekannten Zusätzen wie Pigmenten, Füllstoffen, Farbstoffen, Stabilisatoren.

Weiterer Erfindungsgegenstand ist die Verwendung der erfindungsgemäßen PU-Zubereitung zur Herstellung von leichten Beschichtungen nach dem Thermoaktiv-Einstrich-Umkehrbeschichtungsverfahren durch Aufbringen der PU-Zubereitung auf einen einstweiligen Träger, Trocknen der PU-Schicht, Verbinden eines textilen Substrats unter erhöhtem Druck und erhöhter Temperatur mit der trockenen PU-Schicht und anschließender Mischvernetzung des PU-Verbundes bei erhöhter Temperatur. Das Verfahren wird vorzugsweise kontinuierlich durchgeführt.

Der Vorteil des erfindungsgemäßen Verfahrens zur Herstellung von leichten Beschichtungen mit Auflagemengen von vorzugsweise 15–50 g/m³, besonders 15–30 g/m³, besteht in der Mischvernetzung mit Formaldehydharzen plus blockierten Polyisocyanaten, wobei hohe Trocken- und Naßfestigkeitswerte, d.h. hohe Substrathaftung, erzielt werden. Durch Verwendung wäßriger Zubereitungen ist ferner ein Verfahren zugänglich, das nicht umweltbelastend ist, bzw. bei dem keine Lösungsmittel aufwendig zurückgewonnen werden müssen.

Die hohen Haftwerte bei Vernetzung der wäßrigen PUR-Zubereitungen aus PUR-Dispersionen mit seitenständigen OH-Gruppen am im wesentlichen linearen Polyurethan und PUR-Dispersionen ohne seitenständige OH-Gruppen mit Kombinationen aus Formaldehydharzen und blockierten Polyisocyanaten sind überraschend; sie sind aufgrund der mit den einzelnen Vernetzerarten gemachten Erfahrungen nicht zu erwarten, die synergistische Wirkung der beiden Vernetzerarten auf die Haftung der PUR-Schicht zu den Substraten ist überraschend.

Für die Polyurethan-Dispersions-Mischung (I) werden Polyurethan-Dispersionen A) eingesetzt, welche Polyurethane mit seitenständigen Hydroxyalkylgruppen (Alkylgruppen mit 2 oder mehr C-Atomen), bevorzugt Hydroxyethyl- und/oder 2-Hydroxypropyl-Gruppen, enthalten. Ihre Synthese erfolgt vorzugsweise nach den in der DE-A 2 732 131 angegebenen oder abgewandelten Verfahren, indem man

a) im wesentlichen lineare Prepolymere, welche endständig sowohl Isocyanatgruppen als auch Oxazolidingruppen oder

b) ein im wesentlichen lineare NCO-Prepolymere und Bis-oxazolidine aufweisendes Gemisch

durch Vermischen in Wasser und gegebenenfalls in Gegenwart von weiteren üblichen, gegebenenfalls ionische Gruppen enthaltenden, Kettenverlängerungsmitteln, besonders Diaminen oder ihren Ald- bzw. Ketiminderivaten oder Hydrazin bzw. seinen Ald- oder Ketazinderivaten, kettenverlängert, wobei die Wassermenge so bemessen wird, daß pro Mol an im Reaktionsgemisch vorliegenden Oxazolidingruppen mindestens 1 Mol Wasser vorliegt, vorzugsweise jedoch dispersionsbildende Mengen an Wasser im großen Überschuß vorliegen.

Die Art und Mengenverhältnisse der bei der Herstellung der NCO-Präpolymeren eingesetzten Ausgangsmaterialien werden im übrigen vorzugsweise so gewählt, daß die NCO-Präpolymeren

a) eine mittlere Funktionalität von 1,8 bis 2,2, vorzugsweise 2, und ein mittleres Molekulargewicht von 500–10 000, vorzugsweise 800–4000,

b) einen Gehalt an kationischen oder anionischen eingebauten Gruppen von 0 bis 100, vorzugsweise 0,1 bis 100 und insbesondere 0,5 bis 50 Milli-Äquivalent pro 100 g Feststoff, und

c) einen Gehalt an seitenständig, endständig und/oder innerhalb der Hauptkette eingebauten, innerhalb eines Polyethersegments liegenden Ethylenoxideinheiten von 0 bis 30, vorzugsweise 0,5 bis 30 und insbesondere 1 bis 20 Gew.-%, bezogen auf das Gesamtgewicht des Präpolymeren

aufweisen.

Zu den bevorzugten NCO-Präpolymeren gehören solche, welche entweder ionische Gruppen, insbesondere $-COO^-$, $-SO_3^-$ oder $= N^+ =$, oder nichtionische Gruppen (ethylenoxidhaltige Polyethersegmente) oder sowohl ionische als auch nichtionische Gruppen der genannten Art aufweisen.

Die oben beispielhaft genannten NCO-Präpolymeren mit 1,8 bis 2,2, vorzugsweise 2, endständigen Isocyanatgruppen kommen beim erfindungsgemäßen Verfahren vorzugsweise im Gemisch mit Bisoxazolidinen zum Einsatz.

Unter «Bisoxazolidinen» sind hierbei beliebige organische Verbindungen zu verstehen, die 2, unter dem Einfluß von Wasser eine Hydroxyl- und eine sekundäre Aminogruppe bildende, Oxazolidingruppen aufweisen und ansonsten unter den Bedingungen des erfindungsgemäßen Verfahrens inert sind. Zu den bevorzugten Bisoxazolidinen gehören solche, welche 2 Gruppen der Formel

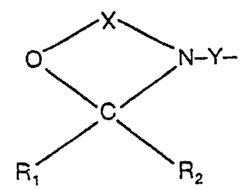

aufweisen, wobei

$R_1$ und $R_2$ für gleiche oder verschiedene Reste stehen und Wasserstoff, aliphatische Kohlenwasserstoffreste mit 1–4 Kohlenstoffatomen, cycloaliphatische Kohlenwasserstoffreste mit 5–7 Kohlenstoffatomen oder aromatische Kohlenwasserstoffreste mit 6–10 Kohlenstoffatomen bedeuten bzw. zusammen mit dem Ring-Kohlenstoffatom gemeinsam einen 5- oder 6-gliedrigen cycloaliphatischen Kohlenwasserstoff-Ring bilden können,

X für einen Rest der Formel

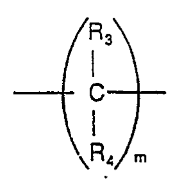

steht, wobei $R_3$ und $R_4$ für gleiche oder verschiedene Reste stehen und $C_1$–$C_4$-Alkylreste, vorzugsweise jedoch Wasserstoff bedeuten und m = 2 bedeuten,

Y für einen Rest der Formel

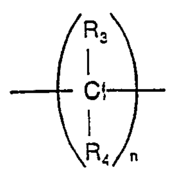

steht, in welcher $R_3$ und $R_4$ die bereits genannte Bedeutung haben und n für eine ganze Zahl von 2 bis 6 steht.

Zu den besonders bevorzugten Bisoxazolidinen gehören solche, in welchen 2 Reste der oben genannten Formel über einen zweiwertigen Rest der Formel

$$-A-Z-A'-$$

verknüpft sind, wobei

A und A' für gleiche oder verschiedene Reste stehen und –CO.O–, –OCO–NH– bedeuten und

Z für einen zweiwertigen aliphatischen Kohlenwasserstoffrest mit 2–14 Kohlenstoffatomen, einen zweiwertigen cycloaliphatischen Kohlenwasserstoffrest mit 5–14 Kohlenstoffatomen oder einen Arylenrest mit 6–15 Kohlenstoffatomen steht.

Zur Herstellung von seitenständig Hydroxyalkylgruppen tragenden Polyurethanen A) werden entweder Gemische der beispielhaft genannten NCO-Präpolymeren mit den beispielhaft genannten Bisoxazolidinen (bevorzugte Ausführung) oder aber überwiegend lineare, Isocyanatgruppen und Oxazolidingruppen aufweisende Präpolymere eingesetzt.

Diese letztgenannten Präpolymeren können auf einfache Weise durch Umsetzung der oben beispielhaft genannten, vorwiegend difunktionellen NCO-Präpolymeren mit Hydroxylgruppen aufweisenden Oxazolidinen der Formel

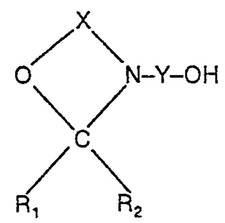

in welcher

$R_1$, $R_2$, X und Y die bereits genannte Bedeutung haben, hergestellt werden.

Bei dieser Herstellung der Isocyanatgruppen und Oxazolidine aufweisenden Präpolymeren gelangen die Reaktionspartner vorzugsweise in solchen Mengenverhältnissen zum Einsatz, daß auf jedes Mol Isocyanatgruppen des NCO-Präpolymeren 0,37–0,53, vorzugsweise 0,4–0,51 Mol Hydroxylgruppen des Hydroxyoxazolidins entfallen. Auf diese Weise werden Reaktionsgemische erhalten, welche pro verbleibender Isocyanatgruppe ca. 0,6–1,1, vorzugsweise ca. 0,65–1,05 Oxazolidingruppen aufweisen. Da es sich bei den Monohydroxyoxazolidinen um monofunktionelle Verbindungen handelt, tritt bei dieser Umsetzung keine Molekülvergrößerung spürbaren Ausmaßes ein. Auch bei den Umsetzungsprodukten handelt es sich somit ebenso wie bei den als Ausgangsmaterialien eingesetzten NCO-Präpolymeren um im wesentlichen lineare Verbindungen.

Sowohl bei den Hydroxyoxazolidinen als auch bei den genannten Bisoxazolidinen handelt es sich um literaturbekannte Verbindungen. Besonders bevorzugt einzusetzende Bisoxazolidine bzw. Hydroxyoxazolidine sind die entsprechenden in US-A 4 002 601 bzw. DE-A 2 446 438 genannten Verbindungen.

Die N-Hydroxyalkyl-oxazolidine werden nach literaturbekannten Methoden hergestellt, wobei ein Keton oder ein Aldehyd unter cyclisierender Dehydratisierung mit einem Bis-(hydroxyalkyl)-amin kondensiert wird und das Reaktionswasser üblicherweise durch ein inertes Schleppmittel bzw. durch die im Überschuß eingesetzte Carbonylverbindung azeotrop entfernt wird.

Als Carbonylverbindungen

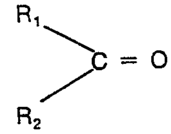

eignen sich insbesondere nachstehend aufgeführte Aldehyde und Ketone:

Formaldehyd, Acetaldyd, Propionaldehyd, Butyraldehyd, Isobutyraldehyd, Aceton, Methylethylketon, Methylisobutylketon, Cyclohexanon und viele andere. Bevorzugt einzusetzende Carbonylverbindungen sind die genannten aliphatischen Aldehyde, insbesondere Isobutyraldehyd.

Als Bis-(hydroxyalkyl)-amine

$$HO-X-NH-Y-OH$$

eignen sich besonders Bis-(2-hydroxyethyl)-amin und Bis-(2-hydroxypropyl)-amin. Im Prinzip ebenso geeignet sind jedoch auch beispielsweise Bis-(2-hydroxybutyl)-amin, Bis-(2-hydroxyhexyl)-amin oder N-(2-hydroxypropyl)-N-(6-hydroxyhexyl)-amin.

Ausgehend von den oben beschriebenen Hydroxyoxazolidinen lassen sich die erfindungsgemäß zu verwendenden, vorzugsweise Urethangruppen aufweisenden, Bisoxazolidine durch Umsetzung mit Diisocyanaten der Formel

$$OCN-Z-NCO$$

(in der Z die oben angegebene Bedeutung besitzt) z.B. Hexamethylendiisocyanat, 3,3,5-Trimethyl-5-isocyanatomethylcyclohexylisocyanat (IPDI), 4,4'-Diisocyanatodicyclohexylmethan, 2,4- und 2,6-Diisocyanatotoluol oder 4,4'-Diisocyanatodiphenylmethan herstellen. Auch die Umsetzung mit Dicarbonsäuren, aliphatischer, cycloaliphatischer oder aromatischer Natur der Formel

$$HOOC-Z-COOH$$

führt zu erfindungsgemäß einsetzbaren, Estergruppen aufweisenden Bisoxazolidinen.

Eine bevorzugte Zusammensetzung für die PU-Dispersionen A) mit seitenständigen Hydroxyalkylgruppen besteht aus 30–60%igen Dispersionen im wesentlichen linearer oder schwach verzweigter Polyurethane auf Basis höhermolekularer Polyole, vorzugsweise Polyestern und/oder Polyethern mit Molekulargewichten von 600–4 000, eingebauten Hydrophilierungsmitteln auf Basis mono- oder polyfunktioneller, überwiegend Oxyethylengruppen enthaltender Polyether und/oder kationischer oder anionischer Polyole oder Polyamine und überschüssigen aliphatischen (einschließlich cycloaliphatischen) Polyisocyanaten, die in NCO-Präpolymere überführt werden.

0,05 bis 0,6, bevorzugt 0,1 bis 0,4 Mol pro NCO-Äquivalent der NCO-Präpolymere, an Bisoxazolidinen, gegebenenfalls blockierten Polyisocyanaten (D) in den angegebenen Mengen,

und 0 bis 0,4, bevorzugt 0,05 bis 0,3 Mol pro NCO-Äquivalent der NCO-Präpolymere, an Diaminen und/oder ihren Ketiminderivaten und/oder Hydrazin(hydrat) und/oder ihren Ketazinderivaten,

sowie überschüssigen Mengen an Wasser.

Die blockierten Polyisocyanate können lösungsmittelfrei oder als z.B. 30–80%ige Lösungen oder Dispersionen zugesetzt werden.

Neben den Hydroxyalkyl-seitengruppenhaltigen Polyurethan-Dispersionen A) werden in (vorzugsweise untergeordneten Mengen) übliche, bekannte Dispersionen I B) auf Basis von Polyurethanen ohne seitenständige Hydroxyalkylgruppen verwendet.

Diese werden in an sich bekannter Weise aus den üblichen Komponenten: höhermolekulare Polyhydroxylverbindungen, z.B. des Molekulargewichtsbereichs 400 bis 8 000, Polyisocyanaten, bevorzugt aliphatischen und cycloaliphatischen Diisocyanaten, hydrophilierend wirkenden Substanzen wie überwiegend ethoxygruppenhaltigen mono- oder polyfunktionellen Polyethern und/oder ionische Gruppen aufweisenden Verbindungen und üblichen Kettenverlängerungsmitteln, z.B. Dialkoholen und/oder Aminoalkoholen und/oder Diaminen bzw. ihren Bisketiminen und/oder Hydrazinhydrat bzw. seinen Ketazinen hergestellt. Entsprechende Verfahren zu ihrer Herstellung und geeignete Ausgangskomponenten sind z.B. in den DE-B 1 097 678, DE-C 1 184 946, DE-C 1 178 586, DE-B 1 237 306, DE-A 1 495 745, DE-A 1 595 602, DE-A 1 770 068, DE-A 1 913 271, DE-A 2 019 324, DE-A 2 811 148, DE-A 2 446 440, DE-A 2 725 589, DE-A 2 732 131 und US-A 4 192 937 und in entsprechenden Publikationen, z.B. D. Dieterich et al, Ang. Chem. 82, 53 (1970), Angew. Makromol. Chem. 76, 85 (1972) und 98, 133–165 (1981) und Progress in Organic Coatings 9, 281–340 (1981) bzw. den darin aufgeführten Literaturstellen beschrieben.

Die zur Herstellung der Polyurethan-Dispersion verwendeten Ausgangskomponente sind z.B. höhermolekulare Polyole, wie zwei- und mehrwertige Hydroxy-Polyester, -Polyacetone, -Polycarbonate, -Polyether und -Polyacetale oder ihre Mischkondensate bzw. Mischungen. Die Molekulargewichte liegen dabei zwischen 400 und 8 000, vorzugsweise zwischen 600 und 4 000.

Als Polyisocyanate sind die zwei- oder mehrwertigen aromatischen, heterocyclischen oder aliphatischen (inklusive cycloaliphatischen) Polyisocyanate, vorzugsweise Diisocyanate geeignet.

Zum Einbau von hydrophilen Zentren werden Polyoxyethylenmono- oder Polyole als alleinige Zentren oder in Abmischung mit ionischen Verbindungen eingesetzt. Die ionischen Verbindungen stellen zumeist anionische Gruppen (z.B. $SO_3^-$ oder Carboxylat- oder Phosphorsäuregruppen) enthaltende Polyole dar, z.B. Sulfonatdiole nach DE-A 2 410 862 oder sulfonatgruppenhaltige Polyamine (z.B. mit Ethylen-, Propylen- oder Butansulfon modifizierte Diamine) dar. Auch kationische Gruppen, z.B. Salze von tert. Aminen sind geeignete hydrophile, ionische Zentren.

Neben den ionischen Kettenverlängerungsmitteln werden auch die üblichen Kettenverlängerungsmittel, wie bereits benannt, mitverwendet.

Die Vernetzerkombination II) besteht aus

C) 2,5 bis 90 Gew.-% (bezogen auf II), vorzugsweise 3 bis 60 Gew.-%, besonders bevorzugt 4 bis 40 Gew.-% an Formaldehyd-Harzen bzw. ihren alkoxylierten Derivaten, vorzugsweise Formaldehyd-Harnstoff- und/oder -Melaminharzen, deren Methylolgruppen teilweise oder ganz mit Alkoholen, z.B. mit Methanol oder Butanol verethert sind. Die Harze können lösungsmittelfrei, gelöst in Wasser oder Alkoholen, zur Anwendung kommen. Die Konzentration der Harzlösungen liegt vorzugsweise zwischen 40 bis 80 Gew.-%.

Die zweite Komponente des Vernetzergemisches II) sind

D) 10 bis 97,5% (bezogen auf II), vorzugsweise 40 bis 97%, besonders bevorzugt 60 bis 96 Gew.-%, aus an den NCO-Gruppen blockierten aliphatischen und/oder (vorzugsweise) aromatischen Polyisocyanaten mit mindestens 2, vorzugsweise 3 oder mehr Funktionen. Die blockierten Polyisocyanate können lösungsmittelfrei oder als Lösungen oder Dispersionen eingesetzt werden.

Mit besonderem Vorteil lassen sich die blockierten Polyisocyanate während der Dispersions-Herstellung der seitenständige Hydroxyalkylgruppen tragenden Polyurethane A) einarbeiten. Als Blockierungsmittel für die Polyisocyanate eignen sich beispielsweise Ketoxime, wie Methylethylketoxim, Diisobutylketoxim, CH-acide Verbindungen wie Malonester und Acetessigsäureester, Phenole wie Phenol oder Nonylphenol oder Lactame wie Caprolactam.

Polyisocyanate der genannten Art sind u.a.:

Biuretisierte Polyisocyanate aus aliphatischen Diisocyanaten wie Hexandiisocyanat oder Isophorondiisocyanat, gegebenenfalls im Gemisch, Isocyanurate aus Hexandiisocyanat-1,6, Isophorondiisocyanat oder Toluylendiisocyanat-2,4 und/oder -2,6.

Der latente NCO-Gehalt der blockierten Polyisocyanate und/oder deren Lösungen oder Dispersionen liegt zwischen 5 bis 35%, bevorzugt 10 bis 20% NCO, bezogen auf Feststoff.

Als Griffmittel III sind langkettige, gesättigte und ungesättigte Fettsäureamide, Fettsäureester, z.B.
Stearinsäureamid, Ölsäureamid,
Erucasäureamid,
Erucasäure-N-(2-oxethyl)-amid,
Erucasäure-N-bis-(2-hydroxyethyl)-amid,
Stearinsäureisobutylester,
Erucasäure-hydroxyethylester,
Ethylenglykol-bis-stearinsäureester,
Propylenglykol-1,3-bis-erucasäureester,
Propylen-1,2-bis-stearinsäureamid,
ferner langkettige Urethane, Harnstoffe, Hydrazide oder Semicarbazide, z.B. N-Stearyl-O-ethylurethan, Distearylurethan oder andere geeignet. Ferner können fein disperse Polymere mit Korngrößen < 10 µm z.B. Polymerisate, Polykondensate oder Polyadditionsprodukte wie Polyethylen- und Polypropylenpulver, pulverförmige Polyacrylate aus Acryl(Methacryl)-säurealkylestern, gegebenenfalls in Mischung mit Acrylnitril, Acrylamid, N-Methylol-acrylamid, N-Methylen-oxalkyletheracrylamiden, Styrol, Divinylbenzol, Polyamid-6, Polyamid-11, pulverförmige Terephthalsäure-Polyester, besonders Polyethylenglykolterephthalat oder auch Celluloseester eingesetzt werden. Die Einarbeitung der Griffmittel erfolgt zweckmäßig durch Vordispergieren.

Silikone IV) als Zusatzstoffe für die Zubereitungen sind z.B. in Toluol lösliche Polydimethyl-polysiloxane, die lösungsmittelfreie Viskositäten von 100 bis 50 000 mPas/25 °C, besonders 500 bis 5 000 mPas/25 °C, aufweisen. Andere Silikone sind organofunktionelle, z.B. Hydroxyalkylengruppen enthaltende Silikone, die in Wasser oder anderen polaren Lösungsmitteln wie Ethylalkohol oder DMF löslich sind. Vorteilhaft sind die Silikone wäßrig dispergiert. Besonders geeignet sind auch ethergruppenhaltige Silikone, die Oxyalkylengruppen, vorzugsweise Oxyethylengruppen und/oder Oxypropylengruppen innerhalb der Polymerkette enthalten.

Den Polyurethan-Zubereitungen zur Herstellung von Beschichtungen nach dem thermoaktiven Einstrich-Umkehrverfahren können in üblicher Weise Pigmente, Füllstoffe, Stabilisatoren, Hydrolyse- und Lichtschutzmittel sowie weitere bekannte Stoffklassen als Additive einverleibt werden.

Die wäßrigen Polyurethan-Zubereitungen können durch Zusatz üblicher wäßriger Verdickungsmittel, z.B. Polyacrylaten oder hochmolekularen Poly-oxyethylen-polyethern, auf Streichviskositäten von 3 000 bis 20 000 mPas/25 °C eingestellt werden.

Die Verwendung der wäßrigen, erfindungsgemäßen Polyurethan-Zubereitungen zur Herstellung von leichten Beschichtungen nach dem Thermoaktiv-Einstrich-Umkehrbeschichtungsverfahren erfolgt vorzugsweise durch Aufbringen (z.B. Aufrakeln) der PU-Zubereitung auf einen einstweiligen Träger (z.B. silikonisiertes Trennpapier oder gegebenenfalls Muster tragenden Silikonmatrizen), Trocknen der Schicht bei Temperaturen bis etwa 120 °C (z.B. 60–100 °C), Kaschieren des Substrats an 20 bis 160 °C, besonders 80 bis 125 °C, heißen Zylindern unter Walzenandruck und anschließendes Ausheizen bei 100 bis 180 °C, vorzugsweise 120 bis 160 °C, zur Vernetzung.

Beispiel 1

Die Polyurethan-Zubereitung zur Herstellung einer Einstrich-Umkehrbeschichtung nach dem Thermoaktiv-Verfahren ist folgendermaßen zusammengesetzt:

970,0 g Polyurethandispersion A) – 40%ig
15,0 g Polyethylendispersion III), 30%ig in Wasser
9,5 g oxalkyliertes Polysiloxan IV) (EO/PO-Gehalt = 70:30), 30%ig in Wasser,
5,0 g Melaminharz C)*, 50%ig in Wasser,
0,5 g Katalysatorlösung (190 g p-Toluolsulfonsäure, 101 g N-Methyl-morpholin, 709 g Wasser).

* Melaminharz C = Cassurit-HML, Hoechst AG

Die ca. 40%ige wäßrige Zubereitung wird mit handelsüblicher wäßriger Verdickerlösung (ca. 1%ige Polyacrylsäure) auf eine Streichviskosität von 6 000 mPas/25 °C eingestellt und mit 10 Gew.-%, bezogen auf den Feststoffgehalt der Zubereitung, an einer handelsüblichen, 50% $TiO_2$ enthaltenden Pigmentpaste pigmentiert.

Die Polyurethan-Dispersion A) mit seitenständigen OH-Gruppen, wird aus folgenden Komponenten hergestellt:

1224 g (0,72 Mol) Mischpolyadipat aus Hexandiol-1,6/Neopentylglykol (Molverhältnis 65/35),
85,5 g (0,04 Mol) monofunktioneller, hydrophiler Ether (gestartet auf n-Butanol, bestehend aus 85 Ethylenoxid- und 15% Propylenoxideinheiten),
110,5 g (0,26 Mol) propoxyliertes Addukt aus 2-Butendiol-1,4 und Natriumbisulfit,
222 g (1,0 Mol) Isophorondiisocyanat (IPDI),
168 g (1,0 Mol) Hexamethylendiisocyanat (HDI),
447 g 75%ige Lösung eines blockierten Isocyanurat-Polyisocyanats D), das durch Trimerisierung von Hexamethylendiisocyanat bis zu einem NCO-Wert von 22,8% und durch anschließende Blockierung der NCO-Gruppen mit einem Gemisch aus Malonsäurediethylester und Acetessigsäureethylester (Molverhältnis 3:2) erhalten wird (Lösemittelgemisch: Xylol/Ethylglykoletheracetat 2:3);
243 g (0,50 Mol) eines Bisoxazolidinurethans (I) aus 2,0 Mol N-Hydroxyethyl-2-isopropyl-oxazolidin und 1 Mol Hexamethylendiisocyanat,
7,5 g (0,15 Mol) Hydrazinhydrat und
3340 g entionisiertes Wasser.

Das Bisoxazolidin (I) besitzt dabei die Formel

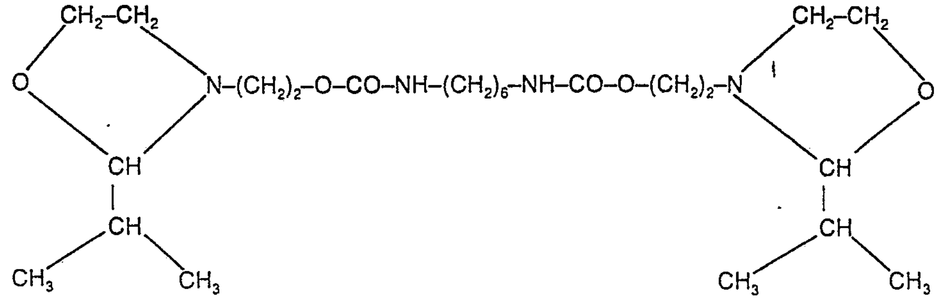

und wird hergestellt aus Diethanolamin und Isobutylaldehyd und Umsetzung des gebildeten Hydroxyethyloxazolidins

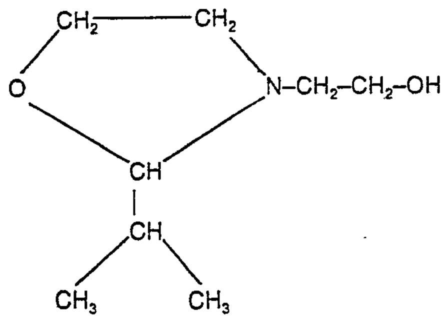

mit Hexan-1,6-diisocyanat zum Bisoxazolidin (I). Dieses spaltet in der Gegenwart von Wasser (unter Abspaltung von Isobutylaldehyd) zu dem Bishydroxymethyl-diamin.

$HO-(CH_2)_2-NH-(CH_2)_2-O-CO-NH-(CH_2)_6-$
$NH-CO-O-(CH_2)_2-NH-(CH_2)_2-OH$,

welches an den aliphatischen Aminogruppen durch Reaktion mit Isocyanaten leicht in die Polyurethandispersion eingebaut wird. (Zur Chemie der Bisoxazolidine vgl. DE-A 2 446 438, US-A 4 002 601 und DE-A 1 952 091, 1 952 092, 2 018 233, 2 446 438 und 2 458 588).

Die Herstellung von A) erfolgt dabei nach folgender Vorschrift:

Zu dem bei 100 °C im Vakuum entwässerten Gemisch aus Polyester, Polyether und Bisulfit-Addukt gibt man das Gemisch aus IPDI und HDI und rührt bei 100 °C bis der NCO-Wert von 4,4% erreicht ist. Man kühlt das Präpolymer auf 75 °C ab, gibt nacheinander das blockierte Polyisocyanat und das Bisoxazolidin zu. Nach 5-minütigem Vermischen läßt man unter gutem Rühren das Wasser, dem das Hydrazinnhydrat zugesetzt ist, zulaufen. Die so erhaltene Dispersion wird 5 Stunden bei 70 °C nachgerührt und dann auf 20 °C abgekühlt. Die Dispersion hat einen Feststoffgehalt von 40%.

Verwendung der PU-Zubereitung im Einstrich-Verfahren.

Die PU-Zubereitung wird auf ein glatt-mattes Trennpapier ein Film von 70 g/m² Naßauflage gerakelt. Bei 60–80 °C wird im 1. Kanal einer Tandembeschichtungsanlage das Wasser verdampft. An einem auf 120 °C geheizten Zylinder, zwischen 1. und 2. Kanal installiert, wird der PUR-Film «thermisch aktiviert» und mit einem Polyester-Gewebe von 120 g/m² Warengewicht unter Andruck von 5 bar kaschiert. Bei der Passage durch den 2. Kanal, 120/140/160 °C, wird das PUR-System vernetzt. Man erhält einen leichten, weichen Beschichtungsartikel von angenehm geschmeidigem Griff, dessen Auflage nur 25 g/m² beträgt. Die Trocken- und Naßhaftung bei «Mischvernetzung» mit Harz und blockiertem Polyisocyanat ist wesentlich besser als bei alleiniger Verwendung der Einzelvernetzer. Außerdem ist der Artikel bei alleiniger Vernetzung mit Harz durch zu harten Griff gekennzeichnet.

Bei Ausführung von Vergleichsversuchen mit den Ausgangsstoffen nach Beispiel 1 ergeben sich für die Trocken- und Naßhaftung (in N/2,5 cm) folgende Werte:

| Vernetzer | Trocken-haftung | Naß-haftung | Griff | |
|---|---|---|---|---|
| 8 Gew.%* Melaminharz C | 12–15 | 8–10 | hart | (Vergleich) |
| 8 Gew.-% Polyisocyanat (blockiert) | 12–15 | 10–12 | weich | (Vergleich) |
| 0,5 Gew.-% Melaminharz<br>7,5 Gew.-% Polyisocyanat (blockiert) | 25–30 | 20–28 | weich | (erfindungsgemäß) |

* bezogen auf Feststoff in dem Polyurethangemisch I

Beispiel 2

Die wäßrige PUR-Zubereitung zur Herstellung einer Einstrich-Transferbeschichtung nach dem Thermoaktiv-Verfahren ist folgendermaßen zusammengesetzt:

850 g ca. 40%ige PUR-Dispersion A) wie in Beispiel 1 beschrieben, (Vernetzer D) enthaltend),
100 g ca. 40%ige PUR-Dispersion B),
die wie folgt hergestellt wurde (vgl. DE-A 2 811 148):

- 485 g Hexandiol-1,6-polyadipat (OH-Zahl 134)
- 20 g Trimethylolpropan
- 82 g propoxyliertes Addukt aus 2-Butendiol-1,4 und $NaHSO_3$ (Mol-Gewicht 425)
- 365 g 4,4'-Dicyclohexylmethandiisocyanat
- 67 g 1,6-Hexandiisocyanat
- 50 g Acetonazin
- 107 g N-Methylpyrrolidon
- 1500 g entsalztes Wasser

Zu dem bei 120 °C entwässerten Gemisch aus dem Polyester, Trimethylolpropan, dem propoxylierten Bisulfitaddukt und 2 g p-Toluolsulfonsäureester gibt man die Diisocyanatmischung zu und erwärmt bei 80–100 °C bis zur Bildung des NCO-Voraddukts. Dann rührt man bei ca. 50 °C das Acetonazin ein, setzt N-Methylpyrrolidon zu, läßt sodann das Wasser unter Bildung der Dispersion einlaufen.

Der Zubereitung werden weiterhin zugefügt:

10,0 g Melaminharz C)*, 100%ig, wasserlöslich, plus
1,0 g Katalysatorlösung wie in Beispiel 1.
25,0 g 40%ige wäßrige Dispersion (III) eines Ethylenglykol-bis-fettsäureesters ($C_{15}$–$C_{18}$-Gemisch)
14,0 g oxalkyliertes Polysiloxan (IV) (EO/PO-Gehalt in der Oxyalkylenkette = 70:30), 100%ig, wasserlöslich.

Die ca. 41%ige wäßrige PUR-Zubereitung wird mit handelsüblicher wäßriger Verdickerlösung auf Polyacrylsäurebasis auf eine Streichviskosität von 10 000 mPas/25 °C gebracht und mit 10% einer handelsüblichen Pigmentpaste (50%ig), von Beispiel 1 für PUR-Dispersion, pigmentiert.

Verwendung:

Wie im Beispiel 1 beschrieben, wird ein Deckstrich von 20 g/m$^2$ Trockengewicht hergestellt und nach thermischer Aktivierung bei 80 °C mit einem Zellwollgewebe von ca. 100 g/m$^2$ Warengewicht unter Preßwalzdruck kaschiert; Vernetzung in der 2. Kanalpassage bei 120 – 140 – 160 °C.

Der leichte, weiche Beschichtungsartikel zeigt trockenen Griff und gutes Haftvermögen und zeichnet sich durch gute Trocken- und Naßhaftung aus, was zu guter Wasch- und Chemisch-Reinigungs-Beständigkeit führt.

Beispiel 3

Die PUR-Zubereitung zur Herstellung einer Einstrich-Transferbeschichtung nach dem Thermoaktiv-Verfahren ist folgendermaßen zusammengesetzt:

840 g ca. 40%ige PUR-Dispersion A) wie in Beispiel 1 beschrieben (Vernetzer D) enthaltend),
80 g ca. 30%ige PUR-Dispersion B),
30,0 g 40%ige Dispersion eines Polyethylacrylatpulvers (III), vernetzt
30,0 g 50%ige Dispersion eines hochmolekularen Polydimethylsiloxans (IV) in Wasser
18,0 g Melaminharz C)*, 100%ig, wasserlöslich
2,0 g Katalysatorlösung, 34%ig in Wasser [190 p-Toluolsulfonsäure, 149 g Triethanolamin, 661 g Wasser].

Die ca. 40%ige wäßrige PUR-Zubereitung wird mit einer handelsüblichen wäßrigen Verdickerlösung auf Polyethylenoxid-Basis auf eine Streichviskosität von 5 000 mPas/25 °C eingestellt und mit 10% einer handelsüblichen Pigmentpaste (50%), entsprechend Beispiel 1 für PUR-Dispersionen, pigmentiert.

Herstellung der Dispersion B):

570 g eines auf Bisphenol A gestarteten Polypropylenglykolpolyethers (OH-Zahl 197)
90 g eines propoxylierten Adduktes aus 2-Butendiol-1,4 und $NaHSO_3$ (OH-Zahl 261)
309 g Hexamethylendiisocyanat
75 g Harnstoff
2380 g entsalztes Wasser
170 g Formaldehyd (30%ig in Wasser)

* Maprenal MF-900; Hoechst AG

76 g Isophorondiisocyanat

Der Polyether und das Addukt werden bei 110 °C unter Rühren im Wasserstrahlvakuum 1 Stunde entwässert und dann auf 70 °C abgekühlt. Danach wird das Diisocyanat zugegeben und das Reaktionsgemisch solange bei 80 °C gerührt, bis ein NCO-Gehalt von 5,5% erreicht ist. Dann wird der Harnstoff zugegeben, das Gemisch auf 125 °C erwärmt und gerührt. Sobald die Schmelze NCO-frei ist, wird auf 100 °C abgekühlt und das Wasser (80 °C warm) eingerührt. Nach ca. 1-stündigem Nachrühren wird der Formaldehyd zugesetzt und das Gemisch noch ca. 1 Stunde bei 70 °C gerührt. Nachdem die Dispersion auf Raumtemperatur abgekühlt ist, wird das Isophorondiisocyanat eingerührt. Die Dispersion wird langsam auf 90 °C erwärmt, wobei darauf zu achten ist, daß die Kohlendioxidentwicklung nicht zu starkem Schäumen führt.

Die so erhaltene Dispersion hat einen Feststoffgehalt von 29,4%, eine Fordbecherviskosität von 12 sec (4 mm Düse) und einen pH-Wert von 6,2.

Verwendung:

Wie in Beispiel 1 wird ein Deckstrich von ca. 25 g/m$^2$ Trockengewicht hergestellt und nach thermischer Aktivierung an einem beheizten Stahlzylinder bei 130 °C mit einem leichten Mischgewebe aus Baumwolle/Polyester (ca. 100 g/m$^2$) kaschiert. Nach Vernetzung bei 130 – 150 – 160 °C erhält man einen leichten, weichen Beschichtungsartikel mit sehr trockener Oberfläche, guter Haftung der PUR-Schicht zum Substrat und daraus resultierender guter Wasch- und Chemisch-Reinigungs-Beständigkeit.

Beispiel 4

Die PUR-Zubereitung zur Herstellung einer Einstrich-Transferbeschichtung nach dem Thermoaktiv-Verfahren ist folgendermaßen zusammengesetzt:

800 g ca. 45%ige PUR-Dispersion A)
100 g ca. 40%ige PUR-Dispersion B)
50,0 g 40%ige wäßrige Dispersion eines PA-6,6-Pulvers (III)
30,0 g oxalkyliertes Polyethersiloxan (EO/PO-Gehalt = 70:30), 100%ig wasserlöslich,
18,0 g Melaminharz C)*, 100%ig, wasserlöslich
2,0 g Katalysatorlösung, 34%ig, wie in Beispiel 3.

Die ca. 43%ige wäßrige PUR-Zubereitung wird mit einer handelsüblichen wäßrigen Verdickerlösung (wie in Beispiel 3) auf eine Streichviskosität von 5 000 mPas/25 °C eingestellt und mit 12% einer üblichen 40%igen $TiO_2$-Pigmentpaste für PUR-Dispersionen pigmentiert.

Die Polyurethandispersion A) wird wie folgt hergestellt:

468 g (0,52 Mol) Butandiol-1,4-polyadipat,
400 g (0,20 Mol) Hexandiol-1,6-polycarbonat,
85,5 g (0,04 Mol) Polyether, gestartet auf n-Butanol, bestehend aus 85% Ethylenoxid, 15% Propylenoxid,

* Maprenal MF-900; Hoechst AG

110,5 g (0,26 Mol) propoxyliertes Addukt aus 2-Butendiol-1,4 und Natriumbisulfit,
267 g (1,20 Mol) Isophorondiisocyanat,
134 g (0,80 Mol) Hexamethylendiisocyanat,
400 g 75%ige Lösung eines Polyisocyanats D), blockiert, wie in Beispiel 1 beschrieben,
194 g (0,40 Mol) des in Beispiel 1 beschriebenen Bisoxazolidin-urethans,
12,5 g (0,25 Mol) Hydrazinhydrat und
2300 g entionisiertes Wasser.

Die Herstellung der ca. 45%igen PUR-Dispersion erfolgt analog Beispiel 1.

Die Herstellung der PUR-Dispersion B) erfolgt aus:

200 g Ethylenglykol-Phthalsäure-Polyester (OH-Zahl 56)
58 g Phthalsäure/Adipinsäure-Ethylenglykol-Polyester (OH-Zahl 64)
43 g Hexamethylendiisocyanat
22 g Aminoethyl-ethyl-sulfonsaures Natrium (50%ige Lösung)
70 g entsalztes Wasser
600 g Aceton
16 g Isophorondiisocyanat (IPDI).

Ein Gemisch der Polyester wird bei 100 °C im Wasserstrahlvakuum unter Rühren 30 Minuten lang entwässert und auf 70 °C abgekühlt. Danach wird das Diisocyanat zugegeben und die Schmelze so lange bei 90 °C gerührt, bis ein NCO-Gehalt von 3,4% erreicht ist. Unter Abkühlen auf 50 °C wird die Schmelze mit Aceton verdünnt. Sobald eine homogene Lösung vorliegt, wird das NCO-Präpolymer mit der Aminosulfonsäure-Lösung verlängert.

5 Minuten nach der Aminzugabe wird das Polyurethan mit Wasser zu einer Dispersion verrührt. Anschließend wird das Aceton abdestilliert, bis der Acetongehalt unter 1 Gew.-% liegt. Bei Raumtemperatur wird dann das Isophorondiisocyanat zugegeben. Die Dispersion wird langsam bis auf 90 °C erwärmt, wobei darauf zu achten ist, daß die $CO_2$-Entwicklung nicht zu starkem Schäumen führt. Nach 4 Stunden ist die Dispersion NCO-frei. Die zentrifugenstabile (15 Min. bei 3 500 U/Min.) Dispersion mit einem Feststoffgehalt von 41,1% hat eine Fordbecherauslaufzeit (4 mm Düse) von 18,3 Sekunden. Der pH-Wert beträgt 6.

Verwendung:

Wie in Beispiel 1 wird ein Deckstrich von ca. 25 g/m$^2$ Trockengewicht hergestellt und nach thermischer Aktivierung bei 120 °C mit einer Wirkware aus Polyacrylfasern kaschiert. Vernetzung 230 – 140 – 160 °C. Der elastische füllige Artikel ist durch gute Wasch- und Chemisch-Reinigungsbeständigkeit gekennzeichnet. In einer anderen Ausführungsform wird der Deckstrich bei 80 bis 100 °C getrocknet, an der 25 °C warmen Walze kaschiert und bei 140 – 160 – 160 °C vernetzt.

Beispiel 5

Die PUR-Zubereitung zur Herstellung einer Einstrich-Transferbeschichtung nach dem Thermoaktiv-Verfahren ist folgendermaßen zusammengesetzt:

830 g 40%ige PUR-Dispersion A) (OH-Seitengruppenhaltig),
70,0 g blockiertes Polyisocyanat D), Isocyanurat aus Hexandiisocyanat-1,6 (1,0 Mol) Toluylendiisocyanat-2,4/2,6 (Isomerengemisch 65/35) (2,0 Mol), blockiert mit einem Gemisch aus Malonsäure-diethylester/Acetessigsäureethylester (2:1), 50%ig in Butylacetat/Ethylglykolacetat/Xylol (1:1:1), NCO-Gehalt ca. 8%,
50,0 g 30%ige wäßrige Dispersion von Ethylendiamin-bis-($C_{16}$–$C_{18}$)-Fettsäureamid (III),
30,0 g Polyethersiloxan (EO/PO-Gehalt = 70:30), 100%ig, wasserlöslich,
16,0 g Formaldehydharnstoffharz C), 100%ig, wasserlöslich (mit partiell Methyl-verätherten Methylolgruppen),
4,0 g Katalysatorlösung, 34%ig wie in Beispiel 3.

Herstellung der Polyurethandispersion A):

720 g (0,72 Mol) Polycaprolacton, gestartet auf Diethylenglykol,
85,5 g (0,04 Mol) Polyether (gestartet auf n-Butanol, bestehend aus 85% Ethylenoxid, 15% Propylenoxid,
110,5 g (0,26 Mol) propoxyliertes Addukt aus 2-Butendiol-1,4 und Natriumbisulfit,
267 g (1,20 Mol) Isophorondiisocyanat,
134 g (0,80 Mol) Hexamethylendiisocyanat,
194 g (0,40 Mol) des in Beispiel 1 beschriebenen Bisoxazolidin-urethans,
12,5 g (0,25 Mol) Hydrazinhydrat und
2190 g entionisiertes Wasser.

Die Umsetzung zu der ca. 40%igen PUR-Dispersion erfolgt analog Beispiel 1.

Die ca. 43%ige wäßrige PUR-Zubereitung wird in üblicher Weise durch Zugabe einer 1% wäßrigen Polyacrylsäurelösung auf Streichviskosität verdickt (ca. 8 000 mm) Pas/25 °C) und wie in Beispiel 3 beschrieben mit einem leichten Polyestergewebe unter Thermoaktivierung kaschiert und vernetzt. Der leichte Oberbekleidungsartikel ist gut wasch- und chemisch-reinigungs-beständig.

Beispiel 6

Die PUR-Zubereitung zur Herstellung einer Einstrich-Transferbeschichtung nach dem Thermoaktiv-Verfahren ist folgendermaßen zusammengesetzt:

955 g 50%ige PUR-Dispersion A), hergestellt wie folgt:
[360 g (0,36 Mol) Dihydroxy-polypropylen-glykolether,
720 g (0,36 Mol) Dihydroxypolyoxytetramethylenpolyether,
85,5 g (0,04 Mol) hydrophiler, monofunktioneller Ether (gestartet auf n-Butanol, bestehend aus 85% Ethylenoxid, 15% Propylenoxid),
110 g (0,26 Mol) propoxyliertes Addukt aus Butendiol-1,4 und Na-Bisulfit,
222 g (1,0 Mol) Isophorondiisocyanat,
168 g (1,0 Mol) Hexamethylendiisocyanat,

500 g 75%ige Lösung eines blockierten Isocyanurat-Polyisocyanats D) (wie in Beispiel 1),
243 g (0,50 Mol) eines Bisoxazolidin-urethans (wie in Beispiel 1),
25,5 g (0,15 Mol) Isophorondiamin und
2195 g entionisiertes Wasser; Umsetzung wie in Beispiel 1. Die Dispersion hat einen Feststoffgehalt von 50%.]
30,0 g 30%ige wäßrige Dispersion eines Polyethylenglykolterephthalates III,
9,0 g 50%ige wäßrige Lösung eines Polyethersiloxans (EO/PO-Gehalt = 70:30),
5,5 g 60%ige wäßrige Lösung eines Formaldehyd-Harnstoff-Harzes C) (von Beispiel 5),
0,5 g 34%ige Katalysatorlösung wie in Beispiel 3.

Die ca. 50%ige wäßrige PUR-Zubereitung wird in üblicher Weise durch Zugabe einer 1% wäßrigen Polyacrylsäurelösung auf Streichviskosität verdickt (ca. 10 000 mPa.s) und wie in Beispiel 3 beschrieben mit einem leichten Polyamidgewebe von 100 g/m$^2$ Warengewicht nach Thermoaktivierung kaschiert. Der leichte Oberbekleidungsartikel kann für Regenschutzbekleidung verwendet werden; Wasch- und Chemisch-Reinigungsbeständigkeit sind gut.

**Patentansprüche**

1. 20 bis 60 gew.-%ige, wäßrige, vernetzerhaltige Beschichtungszubereitungen auf Polyurethan-Dispersionsbasis, dadurch gekennzeichnet, daß sie enthalten:

I) auf 100 Teile Feststoff wäßriger Polyurethan-Dispersionen aus
A) 43 bis 100 Gew.-% an Dispersionen von Polyurethanen mit seitenständigen OH-Gruppen und

B) 0 bis 57 Gew.-% an Dispersionen von Polyurethanen ohne seitenständige OH-Gruppen,
II) 3 bis 50 Teile Feststoff (bezogen auf Feststoff I)) einer Vernetzerkombination aus
C) 2,5 bis 90 Gew.-% an Formaldehydharzen und
D) 10 bis 97,5 Gew.-% an blockierten Polyisocyanaten,
III) 0 bis 15 Teile (bezogen auf I)) an Griffmitteln,
IV) 0 bis 20 Teile (bezogen auf I)) an Silikonen und
V) 0 bis 25 Teile (bezogen auf I)) an sonstigen an sich bekannten Zusätzen.

2. Wäßrige, vernetzerhaltige Zubereitungen auf Polyurethan-Dispersionsbasis nach Anspruch 1, dadurch gekennzeichnet, daß sie in 20 bzw. 60 gew.-%igen Dispersionen enthalten:
I) auf 100 Teile Feststoff wäßriger Polyurethan-Dispersionen aus
A) 70 bis 100% an Dispersionen von Polyurethanen mit seitenständigen OH-Gruppen und
B) 0 bis 30% an Dispersionen von Polyurethanen ohne seitenständige OH-Gruppen,
II) 4 bis 40 Teile Feststoff (bezogen auf Feststoff I)) einer Vernetzerkombination aus
C) 3 bis 60 Gew.-% Formaldehyd-Harnstoff- und/oder Formaldehyd-Melamin-Harzen und
D) 40 bis 97% an blockierten Polyisocyanaten,
III) 0 bis 10 Teile (bezogen auf I)) an Griffmitteln,
IV) 0 bis 12 Teile (bezogen auf I)) an Silikonen und
V) 0 bis 20 Teile (bezogen auf I)) an sonstigen an sich bekannten Zusätzen.

3. Wäßrige, vernetzerhaltige Zubereitungen nach Ansprüchen 1 und 2, dadurch gekennzeichnet, daß die Polyurethandispersion I/A Polyurethane mit seitenständigen Hydroxyalkylgruppen enthalten.

4. Wäßrige, vernetzerhaltige Zubereitungen nach Ansprüchen 1 bis 3, dadurch gekennzeichnet, daß die Polyurethane I/A seitenständige Hydroxyethyl- und/oder 2-Hydroxypropylgruppen enthalten, welche durch Umsetzung von NCO-Prepolymeren mit Bisoxazolidinen oder von überwiegend linearen, Isocyanato- und Oxazolidingruppen aufweisenden NCO-Prepolymeren, und, gegebenenfalls ionischen, Kettenverlängerungsmitteln und Wasser erhalten werden.

5. Wäßrige, vernetzerhaltige Zubereitungen nach Ansprüchen 1 bis 4, dadurch gekennzeichnet, daß man 4 bis 40 Teile einer Vernetzerkombination II aus
C) 3 bis 60 Gew.-% an Formaldehyd-Harnstoff- und/oder Formaldehyd-Melamin-Harzen und
D) 40 bis 97 Gew.-% an blockierten aromatischen Polyisocyanaten einsetzt.

6. Wäßrige, vernetzerhaltige Zubereitungen auf Polyurethan-Dispersionsbasis nach Ansprüchen 1 bis 5, dadurch gekennzeichnet, daß auf 100 Teile Feststoff I) 0,3 bis 3 Gew.-% Griffmittel III), basierend auf feindispersen Polyolefinen und/oder Polyacrylaten und/oder Polyamiden und/oder Polyterephthalaten und 1 bis 5 Gew.-% Silikonen IV) und 0,15 Gew.-% an sonstigen, an sich bekannten, Zusätzen V) verwendet werden.

7. Verwendung der wäßrigen, vernetzerhaltigen Zubereitungen auf Polyurethandispersionsbasis der Zusammensetzung nach Ansprüchen 1 bis 6 zur Herstellung von leichten Beschichtungen nach dem Thermoaktiv-Einstrich-Umkehrbeschichtungsverfahren durch Aufbringen der Polyurethanzubereitung auf einen einstweiligen Träger, Trocknen der PU-Schicht, Verbinden mit einem textilen Substrat unter erhöhtem Druck und erhöhter Temperatur mit der trockenen PU-Schicht und anschließende Vernetzung des Polyurethanverbundes bei erhöhter Temperatur.

8. Verwendung der wäßrigen, vernetzerhaltigen Zubereitungen nach Anspruch 7, zur Herstellung von leichten Beschichtungen nach dem Thermoaktiv-Einstrich-Umkehrbeschichtungsverfahren durch Aufbringen der Polyurethan-Zubereitungen nach Ansprüchen 1 bis 6 auf einen einstweiligen Träger, Trocknen der Schicht bei Temperaturen bis 120 °C, Kaschieren des textilen Substrats an bis 160 °C heißen Zylindern und Walzenandruck und anschließendes Ausheizen bei 120 bis 180 °C zur Vernetzung.

**Claims**

1. 20 to 60% by weight, aqueous crosslinker-containing coating compositions based on polyurethane dispersions, characterized in that they contain:

I) per 100 parts solids of aqueous polyurethane dispersions of

A) 43 to 100% by weight of dispersions of polyurethanes containing lateral OH groups and

B) 0 to 57% by weight of dispersions of polyurethanes with no lateral OH groups,

II) 3 to 50 parts solids (based on solids I) of a crosslinker combination of

C) 2.5 to 90% by weight of formaldehyde resins and

D) 10 to 97.5% by weight blocked polyisocyanates;

III) 0 to 15 parts (based on I)) of handle promoters,

IV) 0 to 20 parts (based on I)) of silicones and

V) 0 to 25 parts (based on I)) of other additives known per se.

2. Aqueous, crosslinker-containing compositions based on polyurethane dispersions as claimed in claim 1, characterized in that, in 20 or 60% by weight dispersions, they contain

I) per 100 parts solids of aqueous polyurethane dispersions of

A) 70 to 100% of dispersions of polyurethanes containing lateral OH groups and

B) 0 to 30% of dispersions of polyurethanes with no lateral OH groups,

II) 4 to 40 parts solids (based on solids I)) of a crosslinker combination of

C) 3 to 60% by weight of formyladehyde-urea and/or formaldehyde-melamine resins and

D) 40 to 97% of blocked polyisocyanates,

III) 0 to 10 parts (based on I)) of feel promoters,

IV) 0 to 12 parts (based on I)) of silicones and

V) 0 to 20 parts (based on I)) of other additives known per se.

3. Aqueous, crosslinker-containing compositions as claimed in claims 1 and 2, characterized in that the polyurethane dispersions I/A contain polyurethanes containing lateral hydroxyalkyl groups.

4. Aqueous, crosslinker-containing compositions as claimed in claims 1 to 3, characterized in that the polyurethanes I/A contain lateral hydroxyethyl and/or 2-hydroxypropyl groups obtained by reaction of NCO prepolymers with bisoxazolidines or of predominantly linear NCO prepolymers containing isocyanato and oxazolidine groups and optionally ionic chain extenders and water.

5. Aqueous, crosslinker-containing preparations as claimed in claims 1 to 4, characterized in that 4 to 40 parts by weight of a crosslinker combination II of

C) 3 to 60% by weight of formaldehyde-urea and/or formaldehyde-melamine resins and

D) 40 to 97% by weight of blocked aromatic polyisocyanates

are used.

6. Aqueous, crosslinker-containing preparations based on polyurethane dispersions as claimed in claims 1 to 5, characterized in that 0.3 to 3% by weight handle promoters III) based on finely disperse polyolefins and/or polyacrylates and/or polyamides and/or polyterephthalates and 1 to 5% by weight silicones IV) and 0.15% by weight of other additives V) known per se are used to 100 parts by weight solids I).

7. The use of the aqueous, crosslinker-containing preparations based on polyurethane dispersions having the composition claimed in claims 1 to 6 for the production of lightweight coatings by the thermoactive one-pass transfer coating process by application of the polyurethane composition to a temporary support, drying of the PU layer, combination with a textile substrate under high pressure and at elevated temperature with the dry PU layer and subsequent crosslinking of the polyurethane composite at elevated temperature.

8. The use of the aqueous, crosslinker-containing preparations claimed in claim 7 for the production of lightweight coatings by the thermoactive one-pass transfer coating process by application of the polyurethane compositions claimed in claims 1 to 6 to a temporary support, drying of the layer at temperatures of up to 120 °C, lamination of the textile substrate on cylinders heated to 160 °C under roller contact pressure and subsequent heating at 120 to 180° for crosslinking.

**Revendications**

1. Préparations aqueuses d'enduction à 20–60%, contenant des agents réticulants, à base de dispersions de polyuréthannes, caractérisées en ce qu'elles contiennent:

I) pour 100 parties de solides des dispersions aqueuse de polyurethannes consistant en

A) 43 à 100% en poids de dispersions de polyuréthannes à groupes OH en chaînes latérales et

B) 0 à 57% en poids de dispersions de polyuréthannes sans groupes OH en chaînes latérales,

II) 3 à 50 parties de solides (rapportés aux solides de I) d'une combinaison réticulante de

C) 2,5 à 90% en poids de résines de formaldéhyde et

D) 10 à 97,5% en poids de polyisocyanates bloqués,

III) 0 à 15 parties (par rapport à I) d'agents améliorant le toucher,

IV) 0 à 20% parties (par rapport à I) de silicones et

V) 0 à 25% parties (par rapport à I) d'autres additifs connus.

2. Préparations aqueuses contenant des agents réticulants à base de dispersions de polyuréthannes selon la revendication 1, caractérisées en ce qu'elles contiennent en dispersions à 20–60% en poids

I) pour 100 parties de solides des dispersions aqueuses de polyuréthannes consistant en

A) 70 à 100% de dispersions de polyuréthannes à groupes OH en chaînes latérales et

B) 0 à 30% de dispersions de polyuréthannes sans groupes OH en chaînes latérales,

II) 4 à 40 parties de solides (rapportés aux solides de I) d'une combinaison réticulante de

C) 3 à 60% en poids de résines formaldéhyde-urée et/ou de résines formaldéhyde-mélanine et

D) 40 à 97% en poids de polyisocyanates bloqués,

III) 0 à 10 parties (par rapport à I) d'agents améliorant le toucher,

IV) 0 à 12 parties (par rapport à I) de silicones et

V) 0 à 20% parties (par rapport à I) d'autres additifs connus.

3. Préparations aqueuses contenant des agents réticulants selon les revendications 1 et 2, caractérisée en ce que la dispersion de polyuréthanne I/A contient des polyuréthannes à groupes hydroxyalkyles en chaînes latérales.

4. Préparations aqueuses contenant des agents réticulants selon les revendications 1 à 3, caractérisées en ce que les polyuréthannes I/A contiennent des groupes hydroxyéthyles et/ou 2-hydroxypropyles en chaînes latérales, qui sont obtenus par réaction de prépolymères à groupes NCO avec des bisoxazolidines ou de prépolymères à groupes NCO essentiellement linéaires, présentant des groupes isocyanates et des groupes oxazolidines, et d'agents éventuellement ioniques d'allongement des chaînes et d'eau.

5. Préparations aqueuses contenant des agents réticulants selon les revendications 1 à 4, caractérisées en ce que l'on utilise 4 à 40 parties d'une combinaison réticulante II de

C) 3 à 60% en poids de résines formaldéhyde-urée et/ou de résines formaldéhyde-mélamine et

D) 40 à 97% en poids de polyisocyanates aromatiques bloqués.

6. Préparations aqueuses, contenant des agents réticulants, à base de dispersions de polyuréthannes selon les revendications 1 à 5, caractérisées en ce que, pour 100 parties de solides de I), on utilise 0,3 à 3% en poids d'agents améliorant le toucher III), à base de polyoléfines et/ou de polyacrylates et/ou de polyamides et/ou de polytéréphtalates finement dispersés et 1 à 5% en poids de silicones IV) et 0,15% en poids d'autres additifs V) connus en soi.

7. Utilisation des préparations aqueuses contenant des agents réticulants à base de dispersions de polyuréthannes ayant la composition selon les revendications 1 à 6 pour la fabrication d'enduits légers selon le procédé thermoactif d'enduction par inversion à une couche par application de la préparation de polyuréthannes sur un support provisoire, séchage de la couche de PU, combinaison d'un substrat textile avec la couche de PU sèche sous pression et à température élevées et ensuite réticulation du composite de polyuréthanne à température élevée.

8. Utilisation des préparations aqueuses contenant des agents réticulants selon la revendication 7 pour la fabrication d'enduits légers selon le procédé thermoactif d'enduction par inversion à une couche par application des préparations de polyuréthannes selon les revendications 1 à 6 sur un support provisoire, séchage de la couche à des températures allant jusqu'à 120 °C, doublage du substrat textile sur des cylindres chauffés jusqu'à 160 °C et sous pression des cylindres et ensuite chauffage à 120–180 °C pour la réticulation.